# EUROPÄISCHE PATENTANMELDUNG

(11) **EP 3 379 153 A1**
(43) Veröffentlichungstag der Anmeldung: **26.09.2018**
(21) Anmeldenummer: 17162339.0
(22) Anmeldetag: 22.03.2017
(51) Int. Cl.: F24D 3/14

(54) **STRAHLPLATTE UND STRAHLHEIZKÖRPER**

(71) Anmelder: Zehnder Group International AG, 5722 Gränichen (CH)
(72) Erfinder: Schumann, Thomas, 9043 Trogen (CH)
(74) Vertreter: Rausch Wanischeck-Bergmann Brinkmann

(57) **Zusammenfassung**

Die Erfindung betrifft eine Strahlplatte (1) für einen Deckenstrahlheizkörper (11) mit Durchgangslöchern (6), wobei wenigstens ein Teil der Durchgangslöcher (6) von der Kreisform abweicht. Darüber hinaus betrifft die Erfindung Strahlheizkörper (11) mit einem Rohrregister (12) zur Führung eines Heizmediums, einer Isolationsschicht (13) zur Schalldämmung und einer Strahlplatte (1).

## Beschreibung

Die Erfindung betrifft eine Strahlplatte für einen Strahlheizkörper insbesondere Deckenstrahlheizkörper oder Wandstrahlheizkörper, mit Durchgangslöchern. Ferner betrifft die Erfindung einen Strahlheizkörper mit einem Rohrregister zur Führung eines Heizmediums, einer Isolationsschicht zur Schalldämmung und einer Strahlplatte.

Strahlheizkörper insbesondere in Form von Deckenstrahlheizkörpern oder Wandstrahlheizkörpern mit Strahlplatten in der Ausgestaltung als Deckenstrahlplatte oder Wandstrahlplatte sind aus dem Stand der Technik gut bekannt, so dass es eines gesonderten druckschriftlichen Nachweises nicht bedarf. Die Strahlplatten sind dabei in der Regel aus einem Material mit vergleichsweise guten Wärmeleitungseigenschaften, insbesondere einem Metall, gebildet. Besagte Materialien weisen jedoch nachteiligerweise vergleichsweise schlechte Schallabsorptionseigenschaften auf.

Es ist zur Behebung dieses Nachteils im Stand der Technik zum Beispiel bekannt, Strahlplatten mit kreisförmigen Löchern zu versehen. Die Löcher tragen dabei selbst zur Schalldämmung bei, indem sie die auf die Strahlplatte treffenden Schallwellen in einem bestimmten Frequenzbereich streuen. Darüber hinaus dienen sie dazu, den nicht gestreuten Anteil der auf die Strahlplatte treffenden Schallwellen durch die Strahlplatte durchzuleiten. Hinter der Strahlplatte treffen die durchgeleiteten Schallwellen dann gegebenenfalls auf eine separate Schalldämmplatte, von welcher sie absorbiert werden.

Unabhängig davon kommt es bei der Formgebung der Strahlplatte stets zu mechanischen Materialspannungen. Bei bestimmungsgemäßem Einsatz dehnt sich die Strahlplatte aufgrund der Hitzeeinwirkung aus und zieht sich beim Erkalten wieder zusammen. Dabei ist die Strahlplatte in Bereichen mit vergleichsweise hoher mechanischer Spannung besonders belastet, was insbesondere bei der Ausdehnung zu Verformungen führen kann.

Nachteiligerweise führt dies zu einer Beeinträchtigung der Strahlungs- und Schalldämmungseigenschaften der Strahlplatte. Darüber hinaus können die Verformungen in diesen Bereichen der Strahlplatte zu einer Beschädigung führen, was eine Reparatur oder schlimmstenfalls den Ersatz des Bauteils erforderlich macht.

Neben solchen durch Wärmeausdehnung hervorgerufenen Materialspannungen können beim bestimmungsgemäßen Einsatz der Strahlplatte auch Materialspannungen aufgrund ihres Eigengewichts auftreten. Dies ist immer dann der Fall, wenn die Strahlplatte nicht vertikal (z.B. an einer Wand), sondern in einem von der Vertikalen abweichenden Winkel angeordnet ist. Besonders ausgeprägt sind derartige Materialspannungen und damit einhergehende Verformungen (Durchhang) der Strahlplatte, wenn diese horizontal angeordnet und nur an ihren Randbereichen gelagert oder aufgehängt ist. Die vertikale Verformung (Durchhang) der Strahlplatte für eine jeweilige gegebene Dicke ist dabei umso grösser je grösser die horizontalen Abmessungen der Strahlplatte sind.

Es ist daher die Aufgabe der Erfindung aus dem Stand der Technik bekannte Strahlplatten und Strahlheizkörper hinsichtlich ihrer Schallabsorptionseigenschaften und ihrer mechanischen Stabilität zu verbessern.

Zur Lösung dieser Aufgabe schlägt die Erfindung eine eingangs genannte Strahlplatte vor, die sich dadurch auszeichnet, dass wenigstens ein Teil der Durchgangslöcher von der Kreisform abweicht.

Es hat sich gezeigt, dass durch die erfindungsgemäße Formgebung der Durchgangslöcher Materialspannungen und Verformungen innerhalb der Strahlplatte vermindert werden. Es hat sich in diesem Zusammenhang herausgestellt, dass die konstruktiv bedingten mechanischen Spannungen innerhalb der Strahlplatte stets in Form von mechanischen Spannungsverläufen entlang von Spannungslinien auftreten. Der Abstand zwischen Spannungslinien ist dabei umso kleiner, je größer die mechanische Spannung in einem Bereich der Strahlplatte ist. Es hat sich gezeigt, dass die vorgenannten Formen die Spannungen entlang der Spannungslinien besonders gut ableiten können. Dabei werden zum einen Materialspannungen unmittelbar bei der Konstruktion der Strahlplatte vermindert. Zum anderen werden die sich bei der hitzebedingten Ausdehnung verstärkenden Materialspannungen von den von der Kreisform abweichenden Durchgangslöchern teilweise absorbiert. Darüber hinaus vermindern die erfindungsgemäßen Durchgangslöcher die hitzebedingte Ausdehnung. Hierdurch weist die Strahlplatte eine verbesserte mechanische Stabilität und, bedingt durch die verminderte Ausdehnung, eine verbesserte Schalldämmung auf. Darüber hinaus können die Schalldämmungseigenschaften durch die Form der Durchgangslöcher individualisiert werden. Aus dem Stand der Technik bekannte Strählplatten mit ausschließlich kreisförmigen Durchgangslöchern sind nur unzureichend an örtliche Gegebenheiten anpassbar. Es könnte in diesem Zusammenhang z.B. wünschenswert sein, in einem Besprechungszimmer unmittelbar über dem Besprechungstisch Strahlheizkörper mit Schalldämmungseigenschaften anzubringen, die sich von denen der Strahlheizkörper unterscheiden, die in anderen Bereichen des Zimmers angebracht sind. Durch die erfindungsgemäßen Durchgangslöcher sind damit zusätzlich zu den vorgenannten Vorteilen Strahlheizkörper im Sinne der Erfindung in Abhängigkeit der räumlichen Gegebenheiten individualisierbar, wodurch die Schalldämmungseigenschaften je nach Position im Raum optimiert sind. Insbesondere sind mit unterschiedlichen Durchgangslochgeometrien die jeweiligen Frequenzanteile einstellbar, die entweder an den Durchgangslöchern gestreut oder durchgelassen werden.

Weiterhin hat sich gezeigt, dass durch die Bereitstellung der erfindungsgemäßen Durchgangslöcher das Eigengewicht und damit die schwerkraftbedingten Verformungen und Materialspannungen bei nicht vertikal angeordneten, sondern in einem von der Vertikalen abweichenden Winkel angeordneten, insbesondere horizontal angeordneten Strahlplatten innerhalb der Strahlplatte vermindert werden. Durch die Anordnung bzw. die Verteilung der Durchgangslöcher und/oder deren Formgebung können solche schwerkraftbedingten Verformungen einer nicht vertikal angeordneten, insbesondere horizontal angeordneten Strahlplatte stark vermindert werden. Das über eine ungelochte oder gleichmäßig gelochte Strahlplatte gegebener Dicke verteilte zweidimensionale Muster der Verformungen und das dazu korrespondierende zweidimensionale Muster der Materialspannungen hängen von den Randbedingungen, d.h. der Art der Abstützung bzw. Aufhängung der horizontal angeordneten Strahlplatte ab.

Erfindungsgemäß ist wenigstens ein Teil der Durchgangslöcher zu diesem Zweck mit einer von der Kreisform abweichenden Form ausgebildet. In Betracht kommen eckige als auch runde Formen. Als bevorzugte eckige Form hat sich die der Raute mit einer langen und einer kurzen Winkelhalbierenden erwiesen. Im Bereich der runden Formen ist es bevorzugt, die Durchgangslöcher elliptisch auszubilden. Es hat sich gezeigt, dass Durchgangslöcher in Form von Rauten und/oder Ellipsen die Spannungen entlang der Spannungslinien besonders gut aufnehmen können. Darüber hinaus führen solche Durchgangslöcher bei bestimmungsgemäßer Anordnung gegenüber kreisförmigen Löchern zu einer Gewichtsreduktion, was für die mechanische Stabilität der Strahlplatte insgesamt vorteilhaft ist.

Gemäß einer bevorzugten Ausgestaltung der Erfindung sind die jeweiligen Konturen der Durchgangslöcher in Abhängigkeit der Spannungslinien der Strahlplatte ausgebildet. Dabei können in Bereichen der Strahlplatte, in denen keine Spannungslinien verlaufen, die mechanisch also nicht oder nur wenig belastet sind, die Durchgangslöcher weiterhin kreisförmig ausgebildet sein. In Bereichen der Strahlplatte mit Spannungslinien ist es hingegen von Vorteil, wenn die Durchgangslöcher von der Kreisform abweichen. Die Kontur kann dabei, wie bereits erwähnt vorzugsweise rautenförmig und/oder elliptisch ausgebildet sein. Die Kontur kann dabei insbesondere hinsichtlich ihrer Abmessung variieren. Insbesondere ist dabei ein Durchgangsloch hinsichtlich seines Umfangs in Abhängigkeit seiner relativen Anordnung zu einer oder mehreren Spannungslinien ausgebildet. Hierdurch lässt sich die Strahlplatte hinsichtlich mechanischer Stabilität und Schalldämmeigenschaften weiter optimieren.

Gemäß einer bevorzugten Ausgestaltung der Erfindung sind die Durchgangslöcher über die Strahlplatte verteilt angeordnet. Vorzugsweise ist die Verteilung dabei heterogen. In bestimmten Bereichen der Strahlplatte können daher Durchgangslöcher unterschiedlicher Form oder Größe oder mit unterschiedlichem Abstand zueinander angeordnet sein. Die Verteilung erfolgt dabei nicht willkürlich, sondern folgt einem festlegbaren Muster. Gemäß einer bevorzugten Ausgestaltung der Erfindung sind die Durchgangslöcher dabei in Abhängigkeit der mechanischen Spannungslinien über die Strahlplatte verteilt. Durch diese gezielte Verteilung wird bereits während der Konstruktion den individuellen Spannungsverläufen der Strahlplatte Rechnung getragen, so dass die mechanische Belastung der Strahlplatte verringert wird. Besonders bevorzugt sind dabei diejenigen Durchgangslöcher die von der Kreisform abweichen im Bereich der Spannungslinien angeordnet. Vorzugsweise sind die von der Kreisform abweichenden Durchgangslöcher unmittelbar auf einer oder einer Mehrzahl von Spannungslinien angeordnet. Die Spannungsaufnahme wird hierdurch in den besonders belasteten Bereichen der Strahlplatte gezielt verbessert.

Gemäß einem weiteren bevorzugten Merkmal der Erfindung weisen die Durchgangslöcher in einem Bereich der Strahlplatte mit einer höheren Anzahl von Spannungslinien einen anderen Abstand zueinander auf als in Bereichen der Strahlplatte mit einer geringeren Anzahl von Spannungslinien. Hierdurch kann die Materialspannung innerhalb der Strahlplatte gezielt in solchen Bereichen abgebaut werden, in denen die Belastung besonders hoch ist. In Bereichen, in denen dies nicht notwendig ist, kann demgegenüber materialsparend auf solche Maßnahmen verzichtet werden. Vorzugsweise sind die Abstände der Durchgangslöcher zueinander, vorzugsweise die Abstände der unmittelbar benachbarten Durchgangslöcher, in Bereichen mit mehreren Spannungslinien größer gewählt als in solchen Bereichen mit wenigen oder keinen Spannungslinien. Es hat sich dabei als besonders bevorzugt erwiesen, den Abstand zwischen unmittelbar benachbarten von der Kreisform abweichenden Durchgangslöchern im Wesentlichen quer zur Verlaufsrichtung der Spannungslinie zu vergrößern. Der Ausdruck "im Wesentlichen quer" bezeichnet dabei im Sinne der Erfindung einen Winkelbereich zwischen Spannungslinie und der Richtung, in der die Durchgangslöcher in Relation zu der Spannungslinie angeordnet sind von 65° bis 115°. Vorzugsweise beträgt der Winkelbereich 80° bis 100°. Besonders bevorzugt lediglich 90°. In diesem Fall ist lediglich der Abstand der Durchgangslöcher orthogonal zur Verlaufsrichtung der jeweiligen Spannungslinie größer als in Bereichen mit weniger bzw. keinen Spannungslinien.

Gemäß einer bevorzugten Ausgestaltung der Erfindung sind die Durchgangslöcher in einem Bereich der Strahlplatte mit einer höheren Anzahl von Spannungslinien mit anderer Größe ausgebildet als in Bereichen der Strahlplatte mit einer geringeren Anzahl von Spannungslinien. Hierdurch kann die Materialspannung innerhalb der Strahlplatte gezielt in solchen Bereichen abgebaut werden, in denen die Belastung besonders hoch ist. In Bereichen, in denen dies nicht notwendig ist, kann demgegenüber materialsparend auf solche Maßnahmen verzichtet werden. Vorzugsweise sind die Durchgangslöcher in einem Bereich der Strahlplatte mit einer höheren Anzahl von Spannungslinien größer ausgebildet als in Bereichen der Strahlplatte mit einer geringeren Anzahl von Spannungslinien. Durch eine solche Vergrößerung der Durchgangslöcher in Abhängigkeit des Spannungsverlaufs können vergleichsweise große Spannungen aufgenommen werden und die Materialbelastungen entsprechend verringert werden. Im Falle von elliptischen Durchgangslöchern ist es bevorzugt, dass die Längen der Hauptachse und/oder der Nebenachse der Ellipse um einen Faktor 1,1 bis 15,0 variierbar sind. Als Referenzlänge ist die jeweilige Achsenlänge eines Durchgangsloches verwendbar, das bestimmungsgemäß in einem Bereich der Strahlplatte angeordnet ist, in welchem ein Minimum an Spannungslinien verlaufen. Bei einem Faktor 10 wäre z.B. die Hauptachse eines in einem Bereich mit vergleichsweise vielen Spannungslinien angeordneten elliptischen Durchgangsloches zehnmal so lang wie die Hauptachse eines in einem Bereich mit keinen Spannungslinien angeordneten elliptischen Durchgangsloches.

Gemäß einer bevorzugten Ausgestaltung der Erfindung sind die von der Kreisform abweichenden Durchgangslöcher in Abhängigkeit der mechanischen Spannungslinien ausgerichtet. Hierdurch wird eine optimierte Kraftaufnahme entlang des Spannungsverlaufs erreicht. Dies hat sich mit Bezug auf die mit der Erfindung zu lösende Aufgabe als besonders effektiv erwiesen. Es ist dabei insbesondere vorgesehen, dass zumindest ein Teil der von der Kreisform abweichenden Durchgangslöcher auf wenigstens einer Spannungslinie angeordnet ist. Vorzugsweise sind ausschließlich von der Kreisform abweichende Durchgangslöcher im Bereich von und/oder unmittelbar auf der wenigstens einen Spannungslinie angeordnet. Vorzugsweise sind die auf der Spannungslinie angeordneten Durchgangslöcher In Verlaufsrichtung der Spannungslinie ausgerichtet. Für elliptisch ausgebildete Durchgangslöcher ist dies so zu verstehen, dass die Hauptachse der Ellipse in Verlaufsrichtung der Spannungslinie ausgerichtet ist. Vorzugsweise ist die Ausrichtung an der Spannungslinie dabei tangential. Diese besonders bevorzugte Ausgestaltung bietet den Vorteil, dass Materialspannungen entlang der Spannungslinien von den Rändern des elliptischen Durchgangsloches aufgenommen werden und die Strahlplatte auf diese Art und Weise entlasten. Die Entlastung ist durch diese Ausgestaltung in synergetischer Weise noch weiter verbessert.

Die erfindungsgemäße Strahlplatte kann aus Metall gefertigt sein, d.h. sie kann als gelochtes Blech ausgebildet sein. Alternativ kann die erfindungsgemäße Strahlplatte aus einem gut wärmeleitenden Verbundmaterial gebildet sein. Vorzugsweise ist das Verbundmaterial ein Verbund aus metallischen Komponenten und nichtmetallischen Komponenten. Die metallischen Komponenten können in Form von Metallfolien, Metalldrähten, Metallfasern, Metallspänen oder Metallpulver vorliegen. Die nichtmetallischen Komponenten können ein organisches Polymermaterial (basierend auf Kohlenstoff-Ketten) und/oder ein anorganisches Polymermaterial (basierend auf Silizium-Ketten) aufweisen. Das organische oder anorganische Polymermaterial kann in Form von Fasern, z.B. als Vlies, als kompakte Masse oder als geschäumte Masse vorliegen.

In einer besonders bevorzugten Ausführung der erfindungsgemäßen Strahlplatte ist diese aus einem Verbundmaterial gefertigt, welches Metallspäne und Wasserglas aufweist. Bei der Herstellung dieses Verbundmaterials werden die Metallspäne zunächst an ihrer Oberfläche oxidiert und dann mit flüssigem Wasserglas vermischt. Diese Metallspäne-Wasserglas-Mischung wird dann in eine Pressform gebracht, in welcher ihr die mit Durchgangslöchern versehene Form der Strahlplatte verliehen wird. Die so geformte Metallspäne-Wasserglas-Mischung wird anschließend getrocknet, wodurch sich die Mischung aushärtet. Die so hergestellte Strahlplatte kann durch die Anordnung bzw. die Verteilung der Durchgangslöcher innerhalb der Strahlplatte und/oder durch die Formgebung der einzelnen Durchgangslöcher an eine durch die Einbausituation der Strahlplatte vorgegebene bekannte Spannungsverteilung innerhalb der Strahlplatte so angepasst werden, dass hitzebedingte oder schwerkraftbedingte Verformungen der Strahlplatte minimiert werden. Die so hergestellte Strahlplatte hat einen größeren E-Modul und eine geringere Dichte als Stahl, was neben der Lochung der Strahlplatte ebenfalls zu einem geringen schwerkraftbedingten Durchhang der Strahlplatte beiträgt. Dem Metallspäne und Wasserglas aufweisenden Verbundmaterial der Strahlplatte ist vorzugsweise ein Hydrophobierungsmittel beigemischt. Insbesondere die Verteilung, die Ausrichtung, die Ausbildung der Kontur der Durchgangslöcher und die übrigen bevorzugten Merkmale der Strahlplatte tragen für sich genommen und in synergetischer Kombination miteinander zur Lösung der der Erfindung zugrunde liegenden Aufgabe bei und verbessern die mechanischen und akustischen Eigenschaften der Strahlplatte über die bloße Lösung hinaus noch weiter.

Zur Lösung der Aufgabe schlägt die Erfindung ferner einen Strahlheizkörper mit einem Rohrregister zur Führung eines Heizmediums, einer Isolationsschicht zur Schalldämmung und einer erfindungsgemäßen Strahlplatte vor.

Durch die synergetische Kombination der erfindungsgemäßen Strahlplatte und einer separaten Isolationsschicht zur Schalldämmung als Teil eines Strahlheizkörpers wird ein Strahlheizkörper bereitgestellt, der hinsichtlich seiner mechanischen Stabilität, seines Gesamtgewichts und seiner Schalldämmeigenschaften gegenüber dem Stand der Technik verbessert ist.

Durch die von der Kreisform abweichenden Durchgangslöcher der Strahlplatte ist sowohl die Streuung des eintreffenden Schalls an den Durchgangslöcher als auch die Schallübertragung durch die Durchgangslöcher verbessert. Hierdurch ist es möglich, die Isolationsschicht in Abhängigkeit der Durchgangslöcher auszubilden. Insbesondere kann zur Erreichung der im Stand der Technik möglichen Dämmeigenschaften eine gleichartige Isolationsschicht mit geringerer Dicke ausgebildet werden. Dies führt zu vorteilhaften Materialeinsparungen. Wodurch der Strahlheizkörper insgesamt mit geringerem Gewicht herstellbar ist. Andererseits hat der Strahlheizkörper im Vergleich zum Stand der Technik vorteilhafterweise bessere Schalldämmeigenschaften, wenn die Isolationsschicht mit weniger geringer oder vergleichbarer Dicke ausgebildet ist.

Die Isolationsschicht ist wenigstens teilweise aus einem schallabsorbieren Material gebildet. Einsetzbar sind insbesondere geschäumte Kunststoffe, Mineralfasern, gummiartige Materialien und Mineralschäume. Die Isolationsschicht kann in Abhängigkeit des gewählten Materials aus losem Dämmstoff gebildet sein. Alternativ kann sie in Form eines Formkörpers, insbesondere als Dämmplatte, oder als Vlies ausgebildet sein. Aufgrund der kompakten Bauweise ist die Verwendung eines Vlieses als Isolationsschicht bevorzugt. Es hat sich gezeigt, dass in Kombination mit der erfindungsgemäßen Ausgestaltung der Strahlplatte Vliese, insbesondere Mineralfaservliese, besonders gute Dämmeigenschaften aufweisen. Der Strahlheizkörper verfügt erfindungsgemäß über ein Rohrregister, eine Isolationsschicht und eine Strahlplatte. Es ist dabei vorzugsweise vorgesehen, dass das Rohrregister zwischen Strahlplatte und Isolationsschicht angeordnet ist. Hierdurch wird die Wärmeübertragung vom Rohrregister auf die Strahlplatte nicht durch die Isolationsschicht beeinträchtigt. Ferner kann der Strahlheizkörper über eine Wärmeübertragungsschicht verfügen. Diese Wärmeübertragungsschicht ist vorzugsweise zwischen Rohrregister und Strahlplatte angeordnet und dient der Verbesserung der Wärmeübertragung von dem Rohrregister auf die Strahlplatte. Insbesondere kann die vom Rohrregister abgegebene Wärme der Strahlplatte durch die Wärmeübertragungsschicht gleichmäßig zugeführt werden. Hierdurch wird die Bildung sogenannter Hotspots, stark erhitzte Bereiche, auf der Strahlplatte verhindert. Hotspots führen dazu, dass sich die Strahlplatte in diesen Bereichen durch die vergleichsweise starke Wärmezufuhr übermäßig ausdehnt, was in nachteiliger Weise zur Erhöhung der Materialspannung führt. Diese hitzeinduzierten Spannungen resultieren in einer herabgesetzten mechanischen Stabilität und einer verringerten Schalldämmung. Durch die Anordnung einer Wärmeübertragungsschicht können daher in synergetischer Kombination mit den übrigen erfindungsgemäßen Maßnahmen die mechanische Stabilität und die Schalldämmeigenschaften verbessert werden. Die Wärmeübertragungsschicht steht dabei vorzugsweise in unmittelbarem Kontakt zu dem Rohrregister einerseits und der Strahlplatte andererseits.

Die Wärmeübertragungsschicht weist wenigstens ein flächig ausgebildetes Bauteil mit vergleichsweise guter Wärmeleitfähigkeit auf. Dies kann eine Metallplatte sein, welche vergleichsweise einfach in der Produktion ist. Bevorzugt ist allerdings die Verwendung einer Schicht, insbesondere einer Platte, aus expandiertem Graphit. Expandiertes Graphit weist einerseits eine vergleichsweise hohe Wärmeleitfähigkeit auf und ist andererseits im Vergleich zu Metall sehr leicht. Darüber hinaus weist es gegenüber Metall bessere Schallabsorptionseigenschaften auf.

Die Wärmeübertragungsschicht ist vorzugsweise derart zwischen Rohrregister und Strahlplatte angeordnet, dass der eintreffende Schall die Wärmeübertragungsschicht passieren kann. Hierzu können eine Mehrzahl von flächigen Bauteilen vorgesehen sein, die unter Belassung jeweils eines Spalts beabstandet nebeneinander angeordnet sind. Durch die derart gebildeten Spalte kann der eintreffende Schall die Wärmeübertragungsschicht passieren. Hierdurch wird die Schalldämmung des Strahlheizkörpers verbessert.

Die Wärmeübertragungsschicht kann gemäß einem bevorzugten Merkmal der Erfindung zur besseren Schalldämmung gelocht ausgebildet sein. Dieses Merkmal verbessert für sich genommen oder in synergetischer Kombination mit der Art der Anordnung der Wärmeübertragungsschicht den Schalldurchtritt durch die Wärmeübertragungsschicht. Zur weiteren Verbesserung der Schalldämmung und der mechanischen Stabilität des Strahlheizkörpers insgesamt können auch die Löcher der Wärmeübertragungsschicht von der Kreisform abweichen. Die Verteilung, Ausrichtung und Ausbildung der Kontur dieser Löcher erfolgt dabei ebenso wie bei den Durchgangslöchern der Strahlplatte in Abhängigkeit etwaiger Spannungslinien in der Wärmeübertragungsschicht.

Alle vorgenannten Merkmale des Strahlheizkörpers tragen für sich genommen und in synergetischer Kombination miteinander zur Lösung der der Erfindung zugrunde liegenden Aufgabe bei und verbessern die mechanischen und akustischen Eigenschaften des Strahlplattenheizkörpers über die bloße Lösung hinaus noch weiter.

Die Erfindung wird nachfolgend anhand eines für den Erfindungsgegenstand nicht beschränkend auszulegenden Ausführungsbeispiels erläutert.

Dabei zeigt:
- Fig.1: eine Deckenstrahlplatte gemäß der Erfindung in schematischer Darstellung in Aufsicht;
- Fig.2: einen Deckenstrahlheizkörper gemäß der Erfindung mit einer Deckenstrahlplatte gemäß Fig.1 in schematischer Schnittdarstellung.

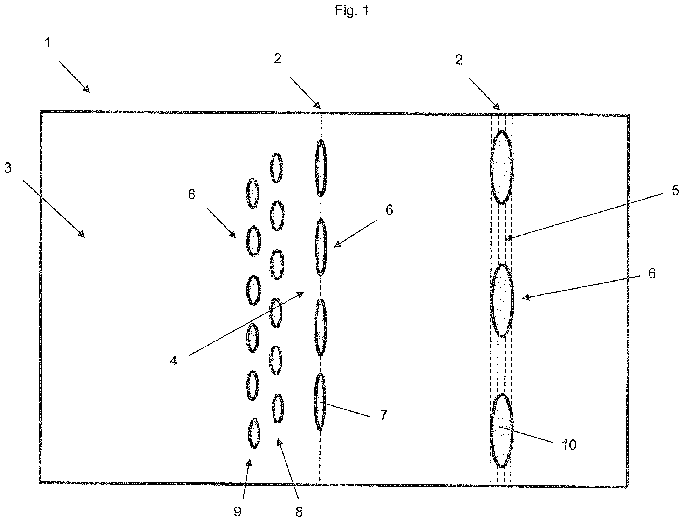

Figur 1 zeigt eine Strahlplatte gemäß der Erfindung in der Ausgestaltung als Deckenstrahlplatte 1 für einen Deckenstrahlheizkörper.

Die Deckenstrahlplatte 1 weist Spannungslinien 2 auf. Erkennbar ist ein Bereich 3 der Deckenstrahlplatte 1 ohne Spannungslinie, ein Bereich 4 mit einer Spannungslinie 2 und ein Bereich 5 mit einer Mehrzahl von Spannungslinien 2. Die Verläufe der Spannungslinien 2 sind vorliegend linear dargestellt. Ebenso sind jedoch nichtlineare Spannungsverläufe denkbar und von der Erfindung mitumfasst. Die lineare Darstellung dient lediglich der Verdeutlichung der Erfindung. Bereiche 5 mit höherer Anzahl an Spannungslinien 2 sind stärkerer mechanischer Belastung in Form von Materialspannung unterworfen, als Bereiche 3, 4 mit wenigen oder keinen Spannungslinien 2.

Die Deckenstrahlplatte 1 weist in Bereichen 4, 5 mit Spannungslinien 2 von der Kreisform abweichende Durchgangslöcher 6 auf. Die Durchgangslöcher 6 sind vorliegend elliptisch ausgebildet. Die Hauptachsen der elliptischen Durchgangslöcher 6 sind dabei parallel zum Verlauf der Spannungslinie 2 ausgerichtet. Hierdurch wird eine optimierte Kraftaufnahme entlang des Spannungsverlaufs erreicht.

Dabei ist das im Bereich 4 der Deckenstrahlplatte 1 mit einer Spannungslinie 2 angeordnete Durchgangsloch 7 derart auf der Spannungslinie 2 angeordnet, dass die Hauptachse und die Spannungslinie 2 deckungsgleich sind. Bei einem hier nicht dargestellten nichtlinearen Verlauf der Spannungslinie 2 erfolgt die Ausrichtung der Hauptachse tangential an der Spannungslinie 2.

Die in unmittelbarer Nachbarschaft zur Spannungslinie 2 im Bereich 4 angeordneten Reihen von Durchgangslöchern 8, 9 sind ebenfalls in Abhängigkeit der Spannungslinie 2 im Bereich 4 ausgerichtet. Dabei sind die Hauptachsen der Ellipsen parallel zu dem Verlauf der Spannungslinie 2 im Bereich 4 der Deckenstrahlplatte mit einer Spannungslinie 2 ausgerichtet. Die Reihen 8, 9 sind versetzt zueinander angeordnet. Hierdurch wird eine optimierte Kraftaufnahme entlang des Spannungsverlaufs erreicht.

Es ist erkennbar, dass der Abstand der Durchgangslöcher 8 quer zu den Durchgangslöchern 6 größer ist, als der Abstand der Durchgangslöcher 8 quer zu den Durchgangslöchern 9. Hierdurch kann die Materialspannung innerhalb der Deckenstrahlplatte gezielt in solchen Bereichen 4, 5 abgebaut werden, in denen die Belastung besonders hoch ist. In Bereichen, in denen dies nicht notwendig ist, kann demgegenüber materialsparend auf solche Maßnahmen verzichtet werden.

Im Bereich 5 der Deckenstrahlplatte 1 ist das elliptische Durchgangsloch 10 auf insgesamt vier Spannungslinien 2 angeordnet. Die Hauptachse der Ellipse ist dabei parallel zur Verlaufsrichtung der Spannungslinien ausgerichtet. Eine Kraftaufnahme zur Verminderung der Spannung erfolgt dabei entlang des Umfangs in Richtung der Hauptachse der Ellipse. Hierdurch wird eine optimierte Kraftaufnahme entlang des Spannungsverlaufs erreicht.

Im Bereich 3 der Deckenstrahlplatte 1 ohne Spannungslinie 2 weist die Deckenstrahlplatte 1 ebenfalls Durchgangslöcher auf, die hier nicht weiter dargestellt sind. Die Durchgangslöcher im Bereich 3 können kreisförmig sein oder in Abhängigkeit der gewünschten akustischen Eigenschaften von der Kreisform abweichen. Vorzugsweise weist die Deckenstrahlplatte 1 ausschließlich Durchgangslöcher auf, die von der Kreisform abweichen. Weiter bevorzugt sind alle Durchgangslöcher elliptisch ausgebildet. Die einzelnen Durchgangslöcher unterscheiden sich in diesem Fall durch Kontur, Größe und/oder Ausrichtung, die in Abhängigkeit der Lage der Spannungslinien 2 bestimmt sind.

Die Deckenstrahlplatte 1 ist vorliegend aus Stahl gebildet. Dieser Werkstoff vereint eine gute Wärmeleitfähigkeit, mechanische Stabilität und einen für Metall vergleichsweise geringen Ausdehnungskoeffizient.

Die Deckenstrahlplatte 1 kann auch aus einem Verbundmaterial gebildet sein, welches Aluminiumspäne und Wasserglas aufweist. Bei der Herstellung dieses Verbundmaterials werden die Aluminiumspäne zunächst an ihrer Oberfläche oxidiert und dann mit flüssigem Wasserglas vermischt. Diese Aluminiumspäne-Wasserglas-Mischung wird dann in eine Pressform gebracht, in welcher ihr die mit Durchgangslöchern versehene Form der Strahlplatte verliehen wird. Die so geformte Aluminiumspäne-Wasserglas-Mischung wird anschließend getrocknet, wodurch sich die Mischung aushärtet. Dabei entsteht an den Grenzflächen zwischen den oxidierten Oberflächen der Aluminiumspäne und der Wasserglas-Matrix ein inniger chemischer Verbund. Darüber hinaus sorgen die durch den Pressvorgang verbogenen und miteinander verhakten Aluminiumspäne für einen mechanischen Verbund. Die so hergestellte Strahlplatte kann durch die Anordnung bzw. die Verteilung der Durchgangslöcher innerhalb der Strahlplatte und/oder durch die Formgebung der einzelnen Durchgangslöcher an eine durch die Einbausituation der Strahlplatte vorgegebene bekannte Spannungsverteilung innerhalb der Strahlplatte so angepasst werden, dass hitzebedingte oder schwerkraftbedingte Verformungen der Strahlplatte minimiert werden. Die so hergestellte Strahlplatte hat einen größeren E-Modul und eine geringere Dichte als Stahl, was neben der Lochung der Strahlplatte ebenfalls zu einem geringen schwerkraftbedingten Durchhang der Strahlplatte beiträgt.

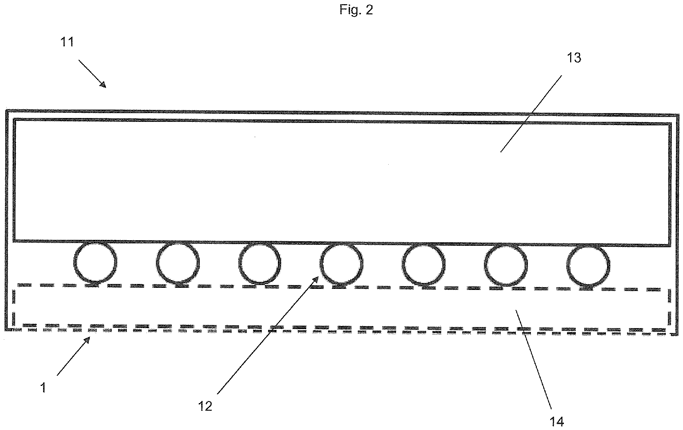

Figur 2 zeigt einen Strahlheizkörper in der besonderen Ausgestaltung eines Deckenstrahlheizkörpers 11. Der Deckenstrahlheizkörper 11 weist ein Rohrregister 12 zur Führung eines Wärmeübertragungsmediums, ein Dämmvlies 13 und eine Deckenstrahlplatte 1 gemäß Figur 1 auf. Durch die synergetische Kombination der erfindungsgemäßen Deckenstrahlplatte 1 und einem separaten Dämmvlies 13 zur Schalldämmung als Teil eines Deckenstrahlheizkörpers 11 ist der Deckenstrahlheizkörper 11 hinsichtlich seiner mechanischen Stabilität, seines Gesamtgewichts und seiner Schalldämmeigenschaften gegenüber dem Stand der Technik verbessert. Durch die von der Kreisform abweichenden Durchgangslöcher 6 der Deckenstrahlplatte 1 ist sowohl die Streuung des eintreffenden Schalls an den Durchgangslöcher 6 als auch die Schallübertragung durch die Durchgangslöcher 6 verbessert.

Das Rohrregister 12 ist vorliegend zwischen dem Dämmvlies 13 und der Deckenstrahlplatte 1 angeordnet. Durch diese Bauart wird die Wärmeübertragung zwischen Rohrregister 12 und Deckenstrahlplatte 1 nicht durch das Dämmvlies 13 beeinträchtigt.

Das Dämmvlies 13 ist vorliegend aus Steinwollfasern gebildet. Es hat sich gezeigt, dass in Kombination mit der erfindungsgemäßen Ausgestaltung der Deckenstrahlplatte 1 Vliese, insbesondere Mineralfaservliese, besonders gute Dämmeigenschaften aufweisen, da sie im Frequenzbereich der nicht schon durch die Durchgangslöcher gestreuten Schallwellen hochwirksam sind. Das Dämmvlies 13 weist vorliegend eine mit aus dem Stand der Technik bekannten Dämmstoffen vergleichbare Dicke auf. Dabei hat der Deckenstrahlheizkörper 11 im Vergleich zum Stand der Technik vorteilhafterweise bessere Schalldämmeigenschaften, die sich aus synergetischer Kombination mit der von der Kreisform abweichenden Durchgangslochausgestaltung der erfindungsgemäßen Deckenstrahlplatte 1 ergeben.

Der Deckenstrahlheizkörper 11 weist ferner eine Wärmeübertragungsplatte 14 auf. Die Platte 14 ist zwischen Rohrregister 12 und Deckenstrahlplatte 1 angeordnet und steht mit beiden Bauteilen in wärmeleitender Verbindung. Sie sorgt dabei für eine gleichmäßige Wärmeübertragung zwischen Rohrregister 12 und Deckenstrahlplatte 1. Hierdurch wird die Bildung sogenannter Hotspots, stark erhitzte Bereiche, auf der Deckenstrahlplatte 1 verhindert. Hotspots führen dazu, dass sich die Deckenstrahlplatte 1 in diesen Bereichen durch die vergleichsweise starke Wärmezufuhr übermäßig ausdehnt, was in nachteiliger Weise zur Erhöhung der Materialspannung führt. Diese hitzeinduzierten Spannungen resultieren in einer herabgesetzten mechanischen Stabilität und einer verringerten Schalldämmung. Durch die Anordnung der Wärmeübertragungsplatte 14 können daher in synergetischer Kombination mit den übrigen erfindungsgemäßen Maßnahmen die mechanische Stabilität und die Schalldämmeigenschaften verbessert werden.

Die Wärmeübertragungsplatte 14 ist vorliegend aus expandiertem Graphit gebildet. Expandiertes Graphit weist einerseits eine vergleichsweise hohe Wärmeleitfähigkeit auf und ist andererseits im Vergleich zu Metall sehr leicht. Darüber hinaus weist es gegenüber Metall bessere Schallabsorptionseigenschaften auf.

Die Wärmeübertragungsplatte 14 trägt durch ihre Ausgestaltung ebenfalls zu den vorteilhaften akustischen Eigenschaften des Deckenstrahlheizkörpers 11 bei. Zu diesem Zweck ist sie vorliegend gelocht ausgebildet. Hierdurch wird der eintreffende Schall nochmals an den Löchern der Wärmeübertragungspl-atte 14 gestreut und andererseits der übrige Schall in Richtung des Dämmvlieses 13 durchgeleitet.

Vorliegend weist die Wärmeübertragungsplatte 14 ebenso wie die Deckenstrahlplatte 1 Löcher auf die von der Kreisform abweichen, indem sie elliptisch ausgeformt sind. Verteilung, Ausrichtung und Kontur der Löcher orientiert sich nach dem Vorbild der Deckenstrahlplatte 1 dabei an nicht dargestellten Spannungslinien der Wärmeübertragungsplatte 14, um einerseits deren mechanische Stabilität und deren Schalldämmeigenschaften in synergetischer Weise mit den übrigen Merkmalen des Deckenstrahlheizkörpers 11 zu verbessern.

### Bezugszeichenliste

- 1: Deckenstrahlplatte
- 2: Spannungslinie
- 3: Bereich der Deckenstrahlplatte ohne Spannungslinie 2
- 4: Bereich der Deckenstrahlplatte mit einer Spannungslinie 2
- 5: Bereich der Deckenstrahlplatte mit einer Mehrzahl von Spannungslinien 2
- 6: Elliptische Durchgangslöcher
- 7: Durchgangsloch im Bereich 4
- 8: Reihe von elliptischen Durchgangslöchern
- 9: Reihe von elliptischen Durchgangslöchern
- 10: Durchgangsloch im Bereich 5
- 11: Deckenstrahlheizkörper
- 12: Rohrregister
- 13: Dämmvlies
- 14: Wärmeübertragungsplatte

## Patentansprüche

1. Strahlplatte für einen Strahlheizkörper insbesondere Deckenstrahlheizkörper oder Wandstrahlheizkörper, mit Durchgangslöchern, **dadurch gekennzeichnet, dass** wenigstens ein Teil der Durchgangslöcher von der Kreisform abweicht.

2. Strahlplatte gemäß Anspruch 1, **dadurch gekennzeichnet, dass** die von der Kreisform abweichenden Durchgangslöcher in Abhängigkeit von mechanischen Spannungslinien der Strahlplatte ausgerichtet sind.

3. Strahlplatte gemäß Anspruch 1 oder 2, **dadurch gekennzeichnet, dass** die Durchgangslöcher in Abhängigkeit von mechanischen Spannungslinien der Strahlplatte über die Strahlplatte verteilt angeordnet sind.

4. Strahlplatte gemäß einem der Ansprüche 1 bis 3, **dadurch gekennzeichnet, dass** die jeweiligen Konturen der Durchgangslöcher in Abhängigkeit von mechanischen Spannungslinien der Strahlplatte ausgebildet sind.

5. Strahlplatte gemäß einem der Ansprüche 1 bis 4, **dadurch gekennzeichnet, dass** die von der Kreisform abweichenden Durchgangslöcher elliptisch und/oder rautenförmig ausgebildet sind.

6. Strahlplatte gemäß einem der Ansprüche 3 bis 5, **dadurch gekennzeichnet, dass** die Durchgangslöcher in einem Bereich der Strahlplatte mit einer höheren Anzahl von Spannungslinien einen anderen Abstand zueinander aufweisen als in Bereichen der Strahlplatte mit einer geringeren Anzahl von Spannungslinien.

7. Strahlplatte gemäß Anspruch 6, **dadurch gekennzeichnet, dass** die Durchgangslöcher in Querrichtung zur Verlaufsrichtung einer der Spannungslinien einen größeren Abstand zueinander aufweisen.

8. Strahlplatte gemäß einem der Ansprüche 3 bis 7, **dadurch gekennzeichnet, dass** die Durchgangslöcher in einem Bereich der Strahlplatte mit einer höheren Anzahl von Spannungslinien mit anderer Größe ausgebildet sind als in Bereichen der Strahlplatte mit einer geringeren Anzahl von Spannungslinien.

9. Strahlplatte gemäß einem der Ansprüche 3 bis 8, **dadurch gekennzeichnet, dass** wenigstens ein Teil der von der Kreisform abweichenden Durchgangslöcher auf wenigstens einer Spannungslinie der Strahlplatte angeordnet ist.

10. Strahlplatte gemäß Anspruch 9, **dadurch gekennzeichnet, dass** die auf der Spannungslinie angeordneten von der Kreisform abweichenden Durchgangslöcher entlang der Verlaufsrichtung der Spannungslinie ausgerichtet sind.

11. Strahlheizkörper mit einem Rohrregister zur Führung eines Heizmediums, einer Isolationsschicht zur Schalldämmung und einer Strahlplatte gemäß einem der Ansprüche 1 bis 10.

12. Strahlheizkörper gemäß Anspruch 11, wobei das Rohrregister zwischen der Strahlplatte und der Isolationsschicht angeordnet ist.

13. Strahlheizkörper gemäß einem der Ansprüche 11 oder 12, wobei die Isolationsschicht als Vlies ausgebildet ist.

14. Strahlheizkörper gemäß einem der Ansprüche 11 bis 13 mit einer Wärmeübertragungsschicht zur gleichmäßigen Wärmeübertragung zwischen Rohrregister und Strahlplatte, wobei die Wärmeübertragungsschicht zwischen Rohrregister und Strahlplatte angeordnet ist

15. Strahlheizkörper gemäß Anspruch 14, wobei die Wärmeübertragungsschicht gelocht ausgebildet ist.
